# EUROPEAN PATENT APPLICATION

(11) **EP 4 749 192 A1**
(43) Date of publication of application: **27.05.2026**
(21) Application number: 25216267.2
(22) Date of filing: 17.11.2025
(51) Int. Cl.: F24C 7/10, F24C 15/12, F24B 1/192

(54) **STOVE LID, STOVE AND METHOD OF HEATING A ROOM**

(30) Priority: 16.11.2024 FI 20247162
(71) Applicant: Wallas-Marin Oy, 20780 Kaarina (FI)
(72) Inventor: Hirvonen, Timo, 24280 Salo (FI); Oksanen, Jussi, 20760 Kaarina (FI); Puro, Janne, 21500 Kaarina (FI)
(74) Representative: Moosedog Oy

(57) **Abstract**

The object of the invention is a stove lid (1), a stove (2) and a method of heating a room. The stove lid (1) can be arranged on a heatable heating plate (3) of the stove (2) to direct air (Aout) heated by the heating plate from an interior (4) of the lid to an outside (5) of the lid. The lid (1) comprises
- a top surface (6) which can be arranged at a distance above the level of the heating plate (3), whereby the interior (4) of the lid is formed between the heating plate (3) and the top surface (6);
- an intake opening (7) for conducting an air flow (Ain) from the outside (5) of the lid to the interior (4) of the lid;
- an outflow opening (8) for conducting an air flow (Aout) from the interior (4) of the lid to the outside (5) of the lid.

The stove lid (1) comprises at least one partition plate (9a, 9b) which divides the interior (4) of the lid into more than one overlapping air channels (10a, 10b, 10c) between the intake opening (7) and the outflow opening (8) so that the lowest air channel (10a) can be arranged against the heating plate (3) and the uppermost air channel (10b) is against the top surface (6) of the lid.

## Description

### TECHNICAL FIELD OF THE INVENTION

The object of the invention is a stove lid, a stove and a method of heating a room as described in the preambles of the independent claims set out below. An object of the invention is, for example, a stove lid, which can be used to heat a room in which the stove is located.

### STATE OF THE ART

State of the art includes lids to be placed on a stove, which lids use the heat from the stove to heat the air flow passing through the lid, which air flow can then heat the room. Lids can be complex in structure or difficult to use or easily break down. The lid, especially the top surface of the lid, may become too hot. The heat transfer capacity of a device can always be improved.

EP 0525647 A1 and US 4641629 A disclose stove lids with which a room can be heated by the air flow passing through them.

### OBJECT OF THE INVENTION

The object of the present invention is to reduce or even eliminate the above-mentioned problems occurring in the state of the art.

It is an object of the present invention to provide a solution that prevents the surface of the stove lid from becoming too hot.

It is an object of the present invention to provide a solution that enhances heat transfer between the stove and the air flow of the lid.

It is an object of the present invention to provide a solution that enables easy and efficient control of air flows in the stove lid.

It is an object of the present invention to provide a stove lid that is more efficient, more reliable, easier to use, and more versatile in its functions.

### BRIEF DESCRIPTION OF THE INVENTION

In order to achieve, among other things, the above-mentioned purposes, the stove lid, stove, method and other objects of the invention are characterized by what is presented in the accompanying independent patent claims.

The application examples and advantages mentioned in this text apply, as applicable, to the stove lid, stove and method according to the invention as well as to other objects of the invention, even if they are not always specifically mentioned.

A typical stove lid according to the invention can be arranged on top of a heatable heating plate of a stove. The lid allows air heated by the heating plate to be directed in a controlled manner from the interior of the lid to the outside of the lid, for example into a room. The lid comprises
- a top surface which can be arranged at a distance above the level of the heating plate. Thus, an interior of the lid is formed between the heating plate and the top surface;
- an intake opening for conducting air from the outside of the lid to the interior of the lid;
- an outflow opening to conduct air from the interior of the lid to the outside of the lid.

The stove lid further comprises at least one partition plate which divides the interior of the lid into more than one overlapping air channel between the intake opening and the outflow opening. In this way, the lowest air channel can be arranged against the heating plate and the uppermost air channel is against the top surface of the lid. The lid comprises at least one of the following for directing the air flows as desired:
- a blower arranged in connection with the intake opening to arrange an air flow from the outside of the lid to the interior of the lid;
- an air flow divider, by which a first part of the air flow coming into the interior of the lid is conducted to the lowest air channel to collect the thermal energy produced by the heating plate and a second part of the air flow coming into the interior of the lid is conducted to cool the top surface of the lid;
- an air mixer for mixing the air flows coming from the air channels into an air flow to be blown to the outside the lid.

A typical stove according to the invention comprises a stove lid according to the invention.

In a typical method according to the invention, a stove lid or stove according to the invention is used to heat a room. The method comprises at least the following steps:
- a lid is arranged on a heatable heating plate of the stove, comprising a top surface, an intake opening and an outflow opening. Thus, an interior of the lid is formed between the heating plate and the top surface;
- the top surface of the lid is arranged at a distance above the level of the heating plate;
- air is conducted through the intake opening from the surroundings of the lid into the interior of the lid;
- the air is heated in the interior of the lid by cooling the heating plate with air;
- air heated by the heating plate is conducted through the outflow opening from the interior of the lid to the outside of the lid into the room.

The stove lid comprises at least one partition plate which divides the interior of the lid into more than one overlapping air channels between the intake opening and the outflow opening so that the lowest air channel is against the heating plate and the uppermost air channel is against the top surface of the lid, whereby the method further comprises at least the following steps
- the heating plate is cooled with the air flow of the lowest air channel;
- transfer of air and heat between the lowest and uppermost air channels is restricted with the partition plate;
- the top surface of the lid is cooled with the airflow of the uppermost air channel.

Air flows are directed as desired with at least one of the following:
- a blower arranged in connection with the intake opening to provide an air flow from the outside of the lid to the interior of the lid;
- an air flow divider, by which a first part of the air flow coming into the interior of the lid is conducted to the lowest air channel to collect the thermal energy produced by the heating plate and a second part of the air flow coming into the interior of the lid is conducted to cool the top surface of the lid;
- an air mixer with which the air flows coming from the air channels are mixed into an air flow to be blown to the outside of the lid.

One way to describe the invention is to say that the air flow flowing through the stove lid is divided into at least two parts by means of one or more partition plates, each part into its own air channels. These parts of the air flow are kept separate inside the lid for at least during the majority of their journey through the lid. The partition plate slows down or even prevents the mixing of the air flows and the transfer of heat from the heating plate to the lid surface.

It has now thus been noticed that a simple structure of two or more air channels can reduce the surface temperature of the stove lid, while at the same time increasing the efficiency of heat transfer from the stove's heating plate to the air flow passing through the lid. An air channel carrying cooler air can be arranged, for example, against the top surface of the lid and/or against its side walls. In this way, the desired outer surfaces of the lid can be kept safely cool.

In one embodiment of the invention, the lid comprises side walls, the lower edges of which can be placed relatively airtightly around the heating plate and the upper edges of which can be arranged at a distance above the level of the heating plate. The top surface of the lid can be supported on the upper edges of the side walls. By means of side walls of a desired height, the top surface of the lid can be raised as desired above the level of the stove.

In one embodiment of the invention, the top surface of the lid can be placed above the heating plate at least substantially horizontally. In one embodiment, the side walls can be placed at least substantially vertically. Other solutions are also possible, but this is probably the simplest. It is possible to use the flat, horizontal top surface of the lid as a storage surface, now also during heating. With the help of the invention, the top surface does not heat up too much.

In one embodiment of the invention, the partition plate is at least substantially parallel to the top surface of the lid. Various shapes are conceivable for the lid and its partition plates, but substantial parallelism is a simple solution.

In one embodiment of the invention, the partition plate covers at least the major part, for example at least 95%, at least 90%, or at least 80%, of the surface area of the top surface of the lid between the intake opening and the outflow opening and/or the surface area of the heating plate covered by the lid. The partition plate can be a continuous plate, whereby the transfer of air and heat between the air channels is reduced.

In one embodiment of the invention, there are more than one partition plates, whereby the interior of the lid is divided into at least three overlapping air channels between the intake opening and the outflow opening. By choosing a different number and arrangement of the air channels, heat transfer and air flows can be directed to suit each situation.

In one application, the top surface of the lid extends beyond all the partition plates in the direction of the air flow. This allows the air flows of different temperatures inside the lid to mix before they exit through the outflow opening.

In one embodiment of the invention, the lid comprises a blower that is integrated into the lid. In one embodiment of the invention, the lid comprises a blower that is arranged in connection with the outflow opening. The blower in connection with the lid moves air flows efficiently and is easy to maintain and use. The blower can also be arranged further away from the lid.

The performance of the lid can be affected with the choice of material for the partition plate. To minimize heat transfer between the air channels, the heating plate or part of it can be made of a material that conducts heat poorly through it. High heat transfer between the air channels is achieved by using a material that conducts heat well.

In one embodiment of the invention, the lowest partition plate, i.e. the partition plate placed closest to the heating plate, is made of ceramic or other material that can withstand high temperatures. The lowest partition plate can, for example, be made of the same material as the heating plate of the stove. The lowest partition plate may, for example, be made of glass. Ceramic can withstand high temperatures without significantly deforming and does not radiate heat back to the stove very effectively.

In one embodiment of the invention, the uppermost partition plate, i.e. the partition plate closest to the top surface of the lid, is made of metal, such as aluminum or iron or steel or other material that effectively conducts heat or effectively releases heat to the air flow. This enhances heat transfer between the air channels.

In one embodiment of the invention, the lid comprises a dividing chamber between the intake opening and the air channels. The dividing chamber has an air flow divider in it, by which, for example, a first part of the air flow is conducted to the lowest air channel to collect the thermal energy produced by the heating plate of the stove and a second part of the air flow is conducted to cool the top surface of the lid. The air flow divider may comprise, for example, air guides. The air flow divider may always be in the same position, or it may be controllable in its function to direct the air flows.

In one embodiment of the invention, the lid comprises a mixing chamber between the air channels and the outflow opening. The mixing chamber has an air mixer, which mixes the air flows coming from the air channels into an air flow to be blown to the outside of the lid. The air mixer may comprise, for example, air guides. The air mixer may always be in the same position, or it may be controllable in its function to direct the air flows. The mixing chamber and/or the air mixer can, for example, be used to control the uniformity of the temperature of the air flow exiting through the outflow opening.

In one embodiment of the invention, at least one electrical control device is connected to the lid, with which device the operation of at least one of the following:
- blower;
- air flow divider;
- air mixer,
can be controlled. This makes it easier to direct the air flows as desired. The control can be automated. In one embodiment, the lid has or is connected to one or more sensors and/ or thermostats that monitor the temperature of the air flows, the lid, the stove or the outside of the lid, such as the room to be heated. The temperature information produced by the sensor or thermostat can, for example, be fed to a computer, where a software to be run produces commands that operate the blower, the air flow divider and/or the air mixer. The user can give the desired temperatures to the computer via a user interface, such as a control panel. In this way, the temperatures can be maintained at the desired levels automatically. The aforementioned sensor, thermostat, computer and means for connecting them to each other can be located in the lid or the stove to which the lid is connected, or further away from the lid.

In one embodiment of the invention, the lid can be connected to the stove in at least two different positions, for example by means of hinges. In the open position, the lid is not on the heating plate of the stove, but the stove can be used normally. In the closed position, the lid is on the heatable heating plate of the stove. In this case, the lid can be used to heat the air according to the invention.

The invention can be arranged, for example, in connection with stoves in boats, motor homes, caravans, or other portable rooms, or residential buildings and other buildings, and for heating them.

### BRIEF DESCRIPTION OF THE FIGURES

The invention is described in more detail below with reference to the enclosed schematic drawing, in which
- Figure 1: shows a stove according to the invention and its lid in the open position,
- Figure 2: shows the stove of Figure 1 and its lid in the closed position, and
- Figure 3: shows a vertical cross-section of a stove and its lid according to the invention.

### DETAILED DESCRIPTION OF EXAMPLES OF THE FIGURES

For the sake of clarity, the same reference numerals are used in different figures and embodiments for the corresponding parts.

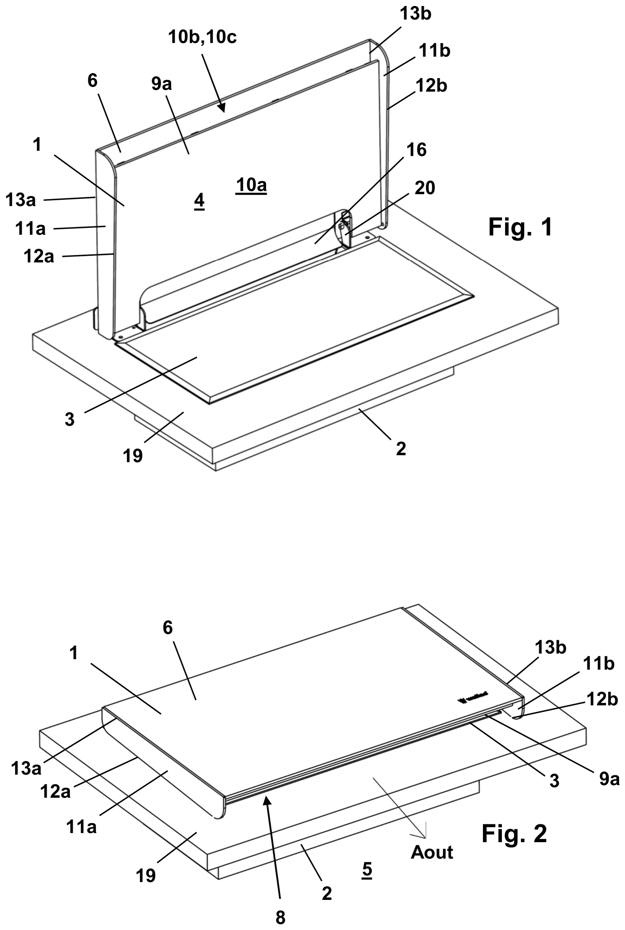

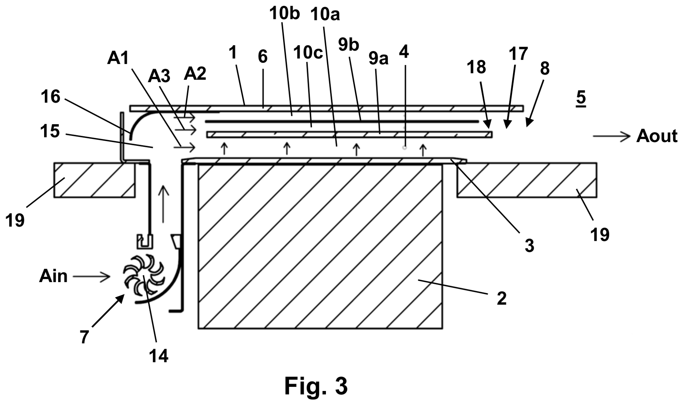

Figures 1 and 2 show a stove 1 according to the invention. The stove is mounted in an opening formed in a tabletop 19. A lid 2 according to the invention is attached to the stove lid via hinges 20. In Figure 1, the lid 2 is in the open position, whereby the stove's heating plate 3 is visible and usable for cooking. In Figure 2, the lid 2 is in the closed position, whereby the stove's heating plate 3 is hidden under the lid 2. In this position, the stove 1 and its lid 2 can be used to perform the method according to the invention of heating a room. Figure 3 shows a vertical cross-section of the stove and its lid according to the invention. In the situation of Figure 3, the lid 2 is in the closed position and heating of the room according to the invention is in progress.

In order to heat the room with the help of the stove 2 and its lid 1, the lid is lowered from the open position of Figure 1 to the closed position shown in Figures 2 and 3, i.e. onto the heatable heating plate 3. In the closed position, the lid 1 comprises a horizontal top surface 6, and from it downwards side walls 11a, 11b, 11c directed towards the stove 2 and the tabletop 19. The lower edges 12a, 12b, 12c of the side walls set relatively airtightly around the heating plate. The top surface 6 of the lid is set at a distance above the level of the heating plate 3. Thus, an interior 4 of the lid is formed between the heating plate 3, the side walls 11a, 11b, 11c and the top surface of the lid 6. An intake opening 7 leads through the lid for conducting a cool air flow Ain from the outside 5 of the lid to the interior 4 of the lid. At the edge of the lid 1 opposite to the intake opening, an air outflow opening 8 leads through the lid for conducting a heated air flow Aout from the interior 4 of the lid to the outside 5 of the lid.

The interior 4 of the lid has two partition plates, namely the lowest partition plate 9a and the uppermost partition plate 9b. The partition plates are parallel to the top surface of the lid 6. They divide the interior 4 of the lid into three overlapping air channels 10a, 10b, 10c between the intake opening 7 and the outflow opening 8. The lowest air channel 10a is between the lowest partition plate 9a and the heating plate 3. The uppermost air channel 10b is between the uppermost partition plate 9b and the top surface of the lid 6. The middle air channel 10c is between the lowest and uppermost partition plates.

The partition plates 9a, 9b cover at least the main part of the surface area of the top surface of the lid 6 between the intake opening 7 and the outflow opening 8 and the surface area of the heating plate 3 covered by the lid 2. In the examples, the lowest partition plate 9a, i.e. the partition plate closest to the heating plate 3, is made of ceramic, such as glass. The uppermost partition plate 9b, i.e. the partition plate closest to the top surface of the lid 6, is made of metal, such as aluminum. The lowest partition plate 9a is slightly longer than the uppermost partition plate in the direction of the air flows. The top surface of the lid 6 extends further than both partition plates 9a, 9b in the direction of the air flows. In this way, the air flows A1, A2 and A3 mix before they exit through the outflow opening 8 as the air flow Aout. By changing the material, size, shape and positioning of the partition plates, the air flows A1, A2 and A3 and the heating power of the lid can be controlled.

A blower 14 is arranged in connection with the intake opening 7. It provides an air flow Ain from the outside 5 of the lid to the interior 4 of the lid. Between the intake opening 7 and the air channels 10a, 10b, 10c there is a dividing chamber 15. There is an air flow divider 16, with which the incoming air flow Ain is divided into three parts A1, A2 and A3. One part to each air channel 10a, 10b, 10c. The first part of the air flow A1 is led to the lowest air channel 10a to cool the heating plate 3. The second part of the air flow A2 is led to the uppermost air channel 10b to cool the top surface of the lid 6. The third part of the air flow A3 is led to the middle air channel 10c. Between the air channels 10a, 10b, 10c and the outflow opening 8 there is a mixing chamber 17. There is an air mixer 18, with which the air flows A1, A2, A3 coming from the air channels 10a, 10b, 10c are mixed into a heated air flow Aout to be blown to the outside 5 of the lid. The mixing chamber 17 and the air mixer 18 can, for example, be used to control the temperature of the outgoing air flow Aout.

In the example of the figures, the suitably shaped ends of the partition plates 9a and 9b serve as the air mixer 18. The heated air Aout can, for example, be blown directly into the room to heat it. The heated air can of course be used for other purposes as well.

The invention is not intended to be limited to the examples presented, but the scope of protection is determined by the independent patent claims. The dependent claims present some advantageous embodiments of the invention.

### Figure reference numerals

Stove lid 1
stove 2
heating plate 3
interior 4 of the lid
outside 5 of the lid
top surface of the lid 6
intake opening 7
outflow opening 8
lowest partition plate 9a
uppermost partition plate 9b
lowest air channel 10a
uppermost air channel 10b
middle air channel 10c
lid side walls 11a, 11b, 11c
lower edges of the lid side walls 12a, 12b, 12c
upper edges of the lid side walls 13a, 13b, 13c
blower 14
dividing chamber 15
air flow divider 16
mixing chamber 17
air mixer 18
tabletop 19
hinges 20
in flowing air Ain
out-blown air Aout
first part of the air flow A1
second part of the air flow A2
third part of the air flow A3

## Claims

1. A stove lid (1) which can be arranged on a heatable heating plate (3) of a stove (2) to direct air (Aout) heated by the heating plate from an interior (4) of the lid to an outside (5) of the lid, which lid comprises
- a top surface (6) which can be arranged at a distance above the level of the heating plate (3), whereby the interior (4) of the lid is formed between the heating plate (3) and the top surface (6);
- an intake opening (7) for conducting an air flow (Ain) from the outside (5) of the lid to the interior (4) of the lid;
- an outflow opening (8) for conducting the air flow (Aout) from the interior (4) of the lid to the outside (5) of the lid;
- at least one partition plate (9a, 9b) which divides the interior (4) of the lid into more than one overlapping air channels (10a, 10b, 10c) between the intake opening (7) and the outflow opening (8) so that the lowest air channel (10a) can be arranged against the heating plate (3) and the uppermost air channel (10b) is against the top surface (6) of the lid;
**characterized in that** the lid comprises at least one of the following for directing air flows as desired
- a blower (14) arranged in connection with the intake opening (7) to arrange the air flow (Ain) from the outside (5) of the lid to the interior (4) of the lid;
- an air flow divider (16), by which a first part (A1) of the air flow (Ain) coming into the interior (4) of the lid is conducted to the lowest air channel (10a) to collect thermal energy produced by the heating plate (3) and a second part (A2) of the air flow (Ain) coming into the interior (4) of the lid is conducted to cool the top surface (6) of the lid;
- an air mixer (18) for mixing the air flows (A1, A2, A3) coming from the air channels (10a, 10b, 10c) into an air flow (Aout) to be blown to the outside (5) of the lid.

2. A stove lid (1) according to claim 1, **characterized in that** an electrical control device is connected to the lid, with which device the operation of at least one of the following:
- blower (14);
- air flow divider (16);
- air mixer (18),
can be controlled to direct the airflows as desired.

3. A stove lid (1) according to claim 1 or 2, **characterized in that** the lid (1) comprises side walls (11a, 11b, 11c), the lower edges (12a, 12b, 12c) of which can be placed relatively airtightly around the heating plate and the upper edges (13a, 13b, 13c) of which can be arranged at a distance above the level of the heating plate, whereby the top surface (6) of the lid is supported on the upper edges (13a, 13b, 13c) of the side walls.

4. A stove lid (1) according to claim 1, 2 or 3, **characterised in that** the partition plate (9a, 9b) is at least substantially parallel to the top surface (6) of the lid.

5. A stove lid (1) according to any previous claim 1 to 4, **characterized in that** the partition plate (9a, 9b) covers at least the main part, for example at least 95%, at least 90%, or at least 80%, of the surface area of the top surface (6) of the lid between the intake opening (7) and the outflow opening (8) and/or of the surface area of the heating plate (3) covered by the lid (2).

6. A stove lid (1) according to any previous claim, **characterized in that** there are more than one partition plates (9a, 9b), whereby the interior (4) of the lid is divided into at least three overlapping air channels (10a, 10b, 10c) between the intake opening (7) and the outflow opening (8).

7. A stove lid (1) according to any previous claim, **characterized in that** the top surface (6) of the lid can be placed above the heating plate (3) at least substantially horizontally and the side walls (11a, 11b, 11c) can be placed at least substantially vertically.

8. A stove lid (1) according to any previous claim, **characterized in that** the lowest partition plate (9a), i.e. the partition plate placed closest to the heating plate (3), is made of ceramic.

9. A stove lid (1) according to any previous claim, **characterized in that** the uppermost partition plate (9b), i.e. the partition plate to be placed closest to the top surface (6) of the lid, is made of metal, such as aluminum.

10. A stove lid (1) according to any previous claim, **characterized in that** the lid comprises a dividing chamber (15) between the intake opening (7) and the air channels (10a, 10b, 10c), in which dividing chamber the air flow divider (16) is located.

11. A stove lid (1) according to any previous claim, **characterized in that** the lid comprises a mixing chamber (17) between the air channels (10a, 10b) and the outflow opening (8), in which the air mixer (18) is located.

12. A stove (2) comprising a stove lid (1) which can be arranged on a heatable heating plate (3) of the stove to direct air (Aout) heated by the heating plate from the interior (4) of the lid to the outside (5) of the lid, **characterized in that** the lid (1) is in accordance with any previous claim 1 to 11.

13. A method of heating a room, the method comprising at least the following steps
- a lid (1) is arranged on a heatable heating plate (3) of a stove (2), comprising a top surface (6), an intake opening (7) and an outflow opening (8);
- the top surface (6) of the lid is arranged at a distance above the level of the heating plate (3), whereby an interior (4) of the lid is formed between the heating plate (3) and the top surface (6) of the lid;
- air (Ain) is conducted through the intake opening (7) from the outside (5) of the lid into the interior (4 of the lid);
- the air is heated in the interior (4) of the lid by cooling the heating plate (3) with air;
- the air (Aout) heated by the heating plate is conducted through the outflow opening from the interior (4) of the lid to the outside (5) of the lid into the room,
whereby the stove lid (1) comprises at least one partition plate (9a, 9b) which divides the interior (4) of the lid into more than one overlapping air channels (10a, 10b, 10c) between the intake opening (7) and the outflow opening (8) so that the lowest air channel (10a) is against the heating plate (3) and the uppermost air channel (10b) is against the top surface (6) of the lid, whereby the method further comprises at least the following steps
- the heating plate (3) is cooled with the air flow (A1) of the lowest air channel (10a);
- transfer of air and heat between the lowest (10a) and the uppermost air channel (10b) is restricted with the partition plate (9a, 9b);
- the top surface of the lid (6) is cooled with the air flow (A2) of the uppermost air channel,
**characterized in that** the air flows are directed as desired with at least one of the following
- a blower (14) arranged in connection with the intake opening (7) to provide an air flow (Ain) from the outside (5) of the lid to the interior (4) of the lid;
- an air flow divider (16), by which a first part (A1) of the air flow (Ain) coming into the interior (4) of the lid is conducted to the lowest air channel (10a) to collect the thermal energy produced by the heating plate (3) and a second part (A2) of the air flow (Ain) coming into the interior (4) of the lid is conducted to cool the top surface (6) of the lid;
- an air mixer (18) with which the air flows (A1, A2, A3) coming from the air channels (10a, 10b, 10c) are mixed into the air flow (Aout) to be blown to the outside (5) of the lid.

14. A method according to claim 13, **characterized in that** the room is heated with a lid (1) according to any previous claim 1 to 11 or with a stove (2) according to claim 12.

15. A method according to claim 14, **characterized in that** the room space to be heated is a boat, a motorhome, a caravan or other mobile room space.
